# EUROPEAN PATENT APPLICATION

(11) **EP 4 356 980 A1**
(43) Date of publication of application: **24.04.2024**
(21) Application number: 21954568.8
(22) Date of filing: 26.08.2021
(51) Int. Cl.: A62C 3/16, A62C 37/14, H01M 10/613, H01M 10/42

(54) **FIREFIGHTING DEVICE, BATTERY PACK, ENERGY STORAGE SYSTEM, AND ELECTRIC VEHICLE**

(71) Applicant: Huawei Digital Power Technologies Co., Ltd., Shenzhen, Guangdong 518043 (CN)
(72) Inventor: LIU, Zongzhe, Shenzhen, Guangdong 518129 (CN); ZHONG, Zheng, Shenzhen, Guangdong 518129 (CN); LE, Bin, Shenzhen, Guangdong 518129 (CN); CHEN, Cheng, Shenzhen, Guangdong 518129 (CN); ZHANG, Yezheng, Shenzhen, Guangdong 518129 (CN); LIN, Zeshun, Shenzhen, Guangdong 518129 (CN)
(74) Representative: Epping - Hermann - Fischer
(86) International application number: PCT/CN2021/114852
(87) International publication number: WO 2023/024040

(57) **Abstract**

Embodiments of this application relate to the energy field, and provide fire extinguishing equipment, a battery pack, an energy storage system, and an electric vehicle, to resolve low applicability of a fire extinguisher and low precision in extinguishing a fire of a battery pack. The fire extinguishing equipment is alternatively understood as a fire extinguisher. The fire extinguishing equipment includes a first chamber, a second chamber, and an activation line. The first chamber stores a fire extinguishing chemical agent, the second chamber stores a gas-generating chemical agent, and the activation line extends into the second chamber to be in contact with the gas-generating chemical agent. The second chamber includes a pressure relief opening, and the pressure relief opening is in communication with the first chamber, and is configured to spray the gas in the second chamber to the first chamber. In other words, the second chamber sprays the gas inside the second chamber into the first chamber through the pressure relief opening. The first chamber includes a discharge opening, and the discharge opening is configured to discharge the fire extinguishing chemical agent in the first chamber after the gas generated after the gas-generating chemical agent is ignited enters the first chamber. In other words, the first chamber discharges the fire extinguishing chemical agent inside the first chamber through the discharge opening.

## Description

### TECHNICAL FIELD

This application relates to the energy field, and in particular, to fire extinguishing equipment, a battery pack, an energy storage system, and an electric vehicle.

### BACKGROUND

In recent years, with improvement of a living standard of people and enhancement of environmental protection awareness, people realize that energy is an issue worthy of attention. Out of consideration for energy and environment, electric vehicles have developed rapidly, among which battery electric vehicles become an important development direction of the electric vehicles because the battery electric vehicles can truly achieve "zero emission". With excellent performance, a lithium-ion battery becomes an ideal power source for a new generation of electric vehicles. The lithium-ion battery has a light weight, large power storage, and large power, causes no pollution and no secondary pollution, has a long service life, a small self-discharge coefficient, and a wide temperature adaptation range, which makes the lithium-ion battery an ideal vehicle battery for electric bicycles, electric motorcycles, electric sedans, large electric trucks, or the like.

Currently, most new energy vehicles use the lithium-ion battery as an energy storage apparatus, and a lithium-ion battery pack is a main component in a battery energy storage system in the energy field. If collision occurs, foreign objects enter a battery cabin, or the lithium-ion battery spontaneously catches fire and explodes due to various reasons, a serious safety problem is caused.

In view of these problems, a solution currently adopted by the industry is central fire extinguishing in which a piping fire extinguisher or a gas cartridge fire extinguisher is used to extinguish a fire of a battery pack, to quickly extinguish a fire source in time. However, in this manner, due to factors such as a complex design and regular maintenance of the piping fire extinguisher or the gas cartridge fire extinguisher, application of the piping fire extinguisher or the gas cartridge fire extinguisher in an embedded lithium battery, a distributed energy storage system, or other scenarios is limited. Second, the central fire extinguishing is for untargeted and large area, which leads to impact of a fire extinguishing chemical agent on a peripheral device and low reliability.

### SUMMARY

Embodiments of this application provide fire extinguishing equipment, a battery pack, an energy storage system, and an electric vehicle, to resolve low applicability of a fire extinguisher and low precision in extinguishing a fire of a battery pack.

To achieve the foregoing objective, the following technical solutions are used in this application.

According to a first aspect, an embodiment of this application provides fire extinguishing equipment which is alternatively understood as a fire extinguisher. The fire extinguishing equipment includes a first chamber, a second chamber, and an activation line. The first chamber stores a fire extinguishing chemical agent, the second chamber stores a gas-generating chemical agent, and the activation line extends into the second chamber to be in contact with the gas-generating chemical agent. In a working process of the fire extinguishing equipment, gas is generated after the activation line ignites the gas-generating chemical agent in the second chamber, and the second chamber sprays the gas inside the second chamber into the first chamber to increase pressure of the first chamber, so that the first chamber discharges the fire extinguishing chemical agent inside the first chamber. For example, the second chamber includes a pressure relief opening, and the pressure relief opening is in communication with the first chamber, and is configured to spray the gas in the second chamber to the first chamber. In other words, the second chamber sprays the gas inside the second chamber into the first chamber through the pressure relief opening. The first chamber includes a discharge opening, and the discharge opening is configured to discharge the fire extinguishing chemical agent in the first chamber after the gas generated after the gas-generating chemical agent is ignited enters the first chamber. In other words, the first chamber discharges the fire extinguishing chemical agent inside the first chamber through the discharge opening.

A working principle of the fire extinguishing equipment provided in this embodiment of this application is: The activation line is configured to ignite the gas-generating chemical agent, the gas is generated after the activation line ignites the gas-generating chemical agent, and air pressure in the second chamber increases. The pressure relief opening is configured to break (for example, break from a first pressure relief film) after the gas-generating chemical agent is ignited, and spray the gas in the second chamber to the first chamber. The air pressure in the first chamber increases, and the discharge opening is configured to discharge (for example, discharge after a second pressure relief film is broken, or discharge after a pressure relief valve is opened) the fire extinguishing chemical agent in the first chamber after the gas enters the first chamber, to implement rapid fire extinguishing. The fire extinguishing equipment provided in this embodiment of this application has a simple working principle and a simple structure, does not require regular maintenance, has a low requirement on an application scenario, is applicable to any scenario, and has a wide application scope.

In some embodiments, at least a part of the second chamber is disposed in the first chamber, and the pressure relief opening is located in the first chamber. At least a part of the second chamber is disposed in the first chamber, so that volumes occupied by the first chamber and the second chamber can be reduced. In addition, the pressure relief opening is located in the first chamber, and a communication structure does not need to be disposed. Therefore, communication between the pressure relief opening and the first chamber can be directly implemented, and the structure is simple. In some embodiments, the pressure relief opening is a first pressure relief film. A structure is simple, and a technology is mature and facilitates implementation.

In some embodiments, the second chamber further includes a first sealing ring and a first connecting piece; two opposite sides of the first sealing ring are respectively in contact with the first pressure relief film and a second part; and the first connecting piece is located on a side that is of the first pressure relief film and that is away from the first sealing ring, and is fastened to the second chamber A structure is simple, and a technology is mature and facilitates implementation.

In some embodiments, a first sealing piece is disposed in the second chamber; and the gas-generating chemical agent is located between the first sealing piece and a first side wall of the second chamber, and the activation line extends into the second chamber from a second side wall of the second chamber, and passes through the first sealing piece to be in contact with the gas-generating chemical agent, where the first side wall is disposed opposite to the second side wall. The second chamber can be sealed relative to the outside by disposing the first sealing piece, to prevent the gas-generating chemical agent from not being discharged because of being damped by external water vapor.

In some embodiments, a first side wall of the second chamber is the pressure relief opening; and the activation line extends into the second chamber from a second side wall of the second chamber, and the first side wall is disposed opposite to the second side wall. The pressure relief opening and the activation line are disposed opposite to each other, and the activation line side provides thrust to enable all the generated gas to be sprayed to the first chamber as much as possible. In this way, the pressure of the first chamber is large when the pressure is relieved, and discharge effect of the fire extinguishing chemical agent is good.

In some embodiments, the second chamber is fastened to the first chamber. The second chamber is fastened to the first chamber, to avoid shaking of the second chamber, to prevent the fire extinguishing equipment from mistakenly discharging the fire extinguishing chemical agent that is caused by an increase in the pressure in the second chamber and the first chamber caused by the shaking of the second chamber.

In some embodiments, the fire extinguishing equipment further includes a first mounting base, and the first mounting base is disposed outside the first chamber, and is fastened to the first chamber; and the second chamber extends out of the first chamber, and is fastened to the first mounting base. The second chamber is fastened to the first chamber by using the first mounting base, which is simple in structure and is easy to implement.

In some embodiments, the first mounting base is a chamber structure with an opening; and the opening of the first mounting base faces the first chamber, the second chamber extends into the first mounting base, and the activation line passes through a chamber bottom of the first mounting base. The first mounting base is disposed as the chamber structure with an opening, the first mounting base is connected to the first chamber through snap-fitting, and the chamber of the first mounting base communicates with a via in the first chamber, so that the first mounting base and the first chamber form a sealed structure. Therefore, compared with that the first chamber is ring-shaped, the first mounting base is the chamber structure with an opening, which can further seal the first chamber and the second chamber.

In some embodiments, the first mounting base and the discharge opening are located on a same side of the first chamber. In this way, other sides of the first chamber can be flexibly designed based on a shape of a battery pack except that a gap needs to be reserved on the side on which the first mounting base and the discharge opening are disposed, to prevent the side from being in contact with a housing of the battery pack. The structure is simple and facilitates installation and placement of the fire extinguishing equipment.

In some embodiments, the discharge opening is a pressure relief valve. A structure is simple, and a technology is mature and facilitates implementation.

In some embodiments, the fire extinguishing equipment further includes a second mounting base, the second mounting base is fastened to the first chamber, and the pressure relief valve is fastened to the second mounting base. The pressure relief valve is fastened to the first chamber by using the second mounting base, which is simple in structure and is easy to implement.

In some embodiments, the discharge opening is a second pressure relief film. A structure is simple, and a technology is mature and facilitates implementation.

In some embodiments, the fire extinguishing equipment further includes a second sealing ring and a second connecting piece; two opposite sides of the second sealing ring are respectively in contact with the second pressure relief film and the first chamber; and the second connecting piece is located on a side that is of the second pressure relief film and that is away from the second sealing ring, and is fastened to the first chamber. A structure is simple, and a technology is mature and facilitates implementation.

In some embodiments, the activation line includes a thermosensitive cable or an igniter. A structure is simple, and a technology is mature and facilitates implementation.

In some embodiments, the activation line includes a thermosensitive cable and an igniter. In this way, the fire extinguishing equipment has functions of active starting and passive starting. Once a passive starting control system fails, the thermosensitive cable that can actively start can further ensure normal use of the fire extinguishing equipment and ensure performance of the extinguishing equipment.

According to a second aspect, an embodiment of this application provides a battery pack, including the fire extinguishing equipment according to any one of the first aspect and at least one cell. The cell is used for power supply; and the fire extinguishing equipment is configured to discharge a fire extinguishing chemical agent when the battery pack catches fire. In this embodiment of this application, the fire extinguishing equipment is disposed in the battery pack. When the battery pack catches fire, the fire of the battery pack may be extinguished by using the fire extinguishing equipment disposed in the battery pack. On the one hand, the fire extinguishing equipment is directly packaged inside the battery pack, the fire of the battery pack can be extinguished from the inside, and fire extinguishing effect is better. On the other hand, the fire extinguishing equipment is for highly targeted coverage and is only for extinguishing the fire of the battery pack to which the fire extinguishing equipment belongs, and the fire extinguishing chemical agent causes little damage to another component.

In some embodiments, the battery pack further includes a detector; and the detector is configured to output a signal when an environment of the battery pack is abnormal. The detector can detect a temperature, smoke, gas, radiation light intensity, liquid, or the like in the battery pack, to output the signal in time when phenomena, such as an opened cell valve, leakage, thermal runaway, BMU carbonization, harness and plastic structure combustion, occur, to implement fast and timely extinguishing of the fire of the battery pack by the fire extinguishing equipment.

In some embodiments, the battery pack further includes a battery management unit connected to an activation line in the fire extinguishing equipment and configured to ignite the activation line. The fire extinguishing equipment is started by using the battery management unit, and a structure is simple and is easy to implement.

According to a third aspect, an embodiment of this application provides an energy storage system, including at least one battery pack, a control unit, and a flame detector. The control unit is separately connected to the battery pack and the flame detector; the battery pack is the battery pack according to any one of the second aspect; and the control unit is configured to control the flame detector to start when a signal of the detector is received; and the flame detector is configured to output a signal to the control unit when an open flame is detected, and the control unit controls an activation line to ignite.

The energy storage system provided in this embodiment of this application includes the battery pack having fire extinguishing equipment. After a detector in the fire extinguishing equipment outputs a signal indicating that an environment of the battery pack is abnormal, the control unit controls the flame detector to detect whether there is the open flame. When the flame detector detects the open flame, the control unit controls the fire extinguishing equipment in the battery pack with the abnormal environment to start fire extinguishing. Because the signal indicating that the environment of the battery pack is abnormal is sent by the battery pack, the control unit may precisely control the fire extinguishing equipment that is in and that corresponds to the battery pack that catches fire to start the fire extinguishing. This reduces damage of the open flame and a fire extinguishing chemical agent to a device and reduces environmental impact.

In some embodiments, the control unit is configured to output a control signal to a battery management unit, to control the battery management unit to ignite the activation line, which is a solution that can be implemented.

In some embodiments, the energy storage system further includes an auxiliary power supply; the auxiliary power supply is connected to the control unit and the activation line; and the control unit is configured to output a control signal to the auxiliary power supply, to control the auxiliary power supply to ignite the activation line, which is a solution that can be implemented.

According to a fourth aspect, an embodiment of this application provides an electric vehicle, including the energy storage system according to any one of the third aspect and a vehicle-mounted charger. The vehicle-mounted charger is connected to the energy storage system, and is configured to charge the energy storage system.

### BRIEF DESCRIPTION OF DRAWINGS

FIG. 1A is a schematic diagram of a structure of fire extinguishing equipment according to an embodiment of this application;
FIG. 1B is a schematic diagram of a structure of other fire extinguishing equipment according to an embodiment of this application;
FIG. 2A is a schematic diagram of a structure of still other fire extinguishing equipment according to an embodiment of this application;
FIG. 2B is a schematic diagram of a structure of a first mounting base according to an embodiment of this application;
FIG. 2C is a schematic diagram of a structure of still other fire extinguishing equipment according to an embodiment of this application;
FIG. 3A is a schematic diagram of a structure of another first mounting base according to an embodiment of this application;
FIG. 3B is a schematic diagram of a structure of still other fire extinguishing equipment according to an embodiment of this application;
FIG. 4A is a schematic diagram of a structure of still another first mounting base according to an embodiment of this application;
FIG. 4B is a schematic diagram of a structure of still other fire extinguishing equipment according to an embodiment of this application;
FIG. 4C is a schematic diagram of a structure of still other fire extinguishing equipment according to an embodiment of this application;
FIG. 5A is a schematic diagram of a structure of still other fire extinguishing equipment according to an embodiment of this application;
FIG. 5B is a schematic diagram of a structure of still other fire extinguishing equipment according to an embodiment of this application;
FIG. 5C is a schematic diagram of a structure of still other fire extinguishing equipment according to an embodiment of this application;
FIG. 5D is a schematic diagram of a structure of a second chamber according to an embodiment of this application;
FIG. 6A is a schematic diagram of a structure of still other fire extinguishing equipment according to an embodiment of this application;
FIG. 6B is a schematic diagram of a structure of still other fire extinguishing equipment according to an embodiment of this application;
FIG. 7A is a schematic diagram of a structure of still other fire extinguishing equipment according to an embodiment of this application;
FIG. 7B is a schematic diagram of a structure of still other fire extinguishing equipment according to an embodiment of this application;
FIG. 8A is a schematic diagram of a structure of a battery pack according to an embodiment of this application;
FIG. 8B is a schematic diagram of a structure of another battery pack according to an embodiment of this application; and
FIG. 9 is a schematic diagram of a structure of an energy storage system according to an embodiment of this application.

### DESCRIPTION OF EMBODIMENTS

The following describes technical solutions in embodiments of this application with reference to accompanying drawings in embodiments of this application. It is clear that the described embodiments are merely a part rather than all of embodiments of this application.

In embodiments of this application, terms such as "first" and "second" mentioned below are merely intended for ease of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more.

In embodiments of this application, "up", "down", "left", and "right" are not limited to orientations of schematically placed components in relative accompanying drawings. It should be understood that these orientation terms may be relative concepts. The orientation terms are used for relative description and clarification, and may vary correspondingly based on a change in an orientation in which the component is placed in the accompanying drawings. In embodiments of this application, unless the context requires otherwise, in the entire specification and claims, the term "include" is interpreted as an open and inclusive meaning, that is, "include but is not limited to". In the description of the specification, terms "one embodiment", "some embodiments", "example embodiments", "for example", "some examples", or the like are intended to indicate that particular features, structures, materials, or characteristics related to embodiments or the examples are included in at least one embodiment or example of the present disclosure. The foregoing example expressions of the terms are not necessarily a same embodiment or example. In addition, the described particular features, structures, materials, or characteristics may be included in any one or more embodiments or examples in any appropriate manner.

In description of some embodiments, expressions of "coupling" and "connection" and an extended expression thereof may be used. For example, the term "connection" may be used in describing some embodiments to indicate that two or more components are in direct physical or electrical contact with each other. For another example, the term "coupling" may be used in describing some embodiments to indicate that two or more components are in direct physical or electrical contact. However, the term "coupling" may also mean that two or more components are not in direct contact with each other, but still cooperate or interact with each other Embodiments disclosed herein are not necessarily limited to content of the specification.

A term "and/or" in embodiments of this application describes only an association relationship between associated objects and represents that three relationships may exist. For example, A and/or B may represent the following three cases: Only A exists, both A and B exist, and only B exists. In addition, a character "/" in this specification usually indicates an "or" relationship between the associated objects.

Example implementations are described in embodiments of this application with reference to a sectional view and/or a plan view and/or an equivalent circuit diagram that are idealized example drawings. In the drawings, thicknesses of layers and regions are enlarged for clarity. Therefore, variations in shape relative to the drawings due to, for example, a manufacturing technology and/or tolerance are conceivable. As a result, the example embodiments should not be interpreted as being limited to the shape of the region shown in this specification, but rather to include a shape deviation caused by, for example, manufacturing. For example, an etching region shown as a rectangle typically has a curved feature. Therefore, the regions shown in the drawings are illustrative in nature, and the shapes of the regions are not intended to illustrate actual shapes of regions of a device, and are not intended to limit the scope of the example embodiments.

In recent years, with improvement of a living standard of people and enhancement of environmental protection awareness, people realize that energy is an issue worthy of attention. Out of consideration for energy and environment, electric vehicles have developed rapidly, among which battery electric vehicles have become an important development direction of the electric vehicles because the battery electric vehicles can truly achieve "zero emission". With excellent performance, a lithium-ion battery becomes an ideal power source for a new generation of electric vehicles. The lithium-ion battery has a light weight, large power storage, and large power, causes no pollution and no secondary pollution, has a long service life, a small self-discharge coefficient, and a wide temperature adaptation range, which makes the lithium-ion battery an ideal vehicle battery for electric bicycles, electric motorcycles, electric sedans, large electric trucks, or the like.

Currently, most new energy vehicles use the lithium-ion battery as an energy storage apparatus, and there are still many technical problems brought by using the lithium-ion battery as the energy storage apparatus, for example, during use of the lithium-ion battery, a volume of the battery swells to different degrees due to various reasons, such as a phase change, a particle stacking mode, secondary reaction product accumulation, and gas generation. In particular, in the electric vehicle, lithium-ion batteries are arranged and used in groups, and accumulated volume swelling of a plurality of batteries causes stress on a fastening apparatus in the module. When the stress accumulates too much, the fastening apparatus of the module is damaged, which brings a failure and a security risk. For example, the lithium-ion battery spontaneously catches fire and explodes, which brings a serious safety problem. Therefore, how to precisely and quickly extinguish the fire and avoid serious harm becomes one of key issues of the new energy vehicles.

A solution currently adopted by the industry is central fire extinguishing in which a piping fire extinguisher or a gas cartridge fire extinguisher is used to extinguish a fire of a battery pack, to quickly extinguish a fire source in time. In other words, one fire extinguisher is used to perform, on a plurality of battery packs, fire extinguishing with untargeted and whole coverage. However, in this manner, due to factors such as a complex design and regular maintenance of the piping fire extinguisher or the gas cartridge fire extinguisher, application of the piping fire extinguisher or the gas cartridge fire extinguisher in an embedded lithium battery, a distributed energy storage system, or other scenarios is limited. Second, the central fire extinguishing is not for targeted coverage, and a fire extinguishing chemical agent covers a large area, which leads to impact of the fire extinguishing chemical agent on a peripheral device.

In view of low adaptability and low fire extinguishing precision of the fire extinguisher, embodiments of this application provide a new fire extinguisher applicable to an embedded lithium battery, a distributed energy storage system, or other scenarios, and the fire extinguisher is separately installed in each battery pack, to precisely extinguish a fire of the battery pack.

An embodiment of this application provides fire extinguishing equipment which may alternatively be understood as a fire extinguisher. The fire extinguishing equipment may be used in a battery pack, or another structure that requires fire extinguishing reserve, or may be used alone.

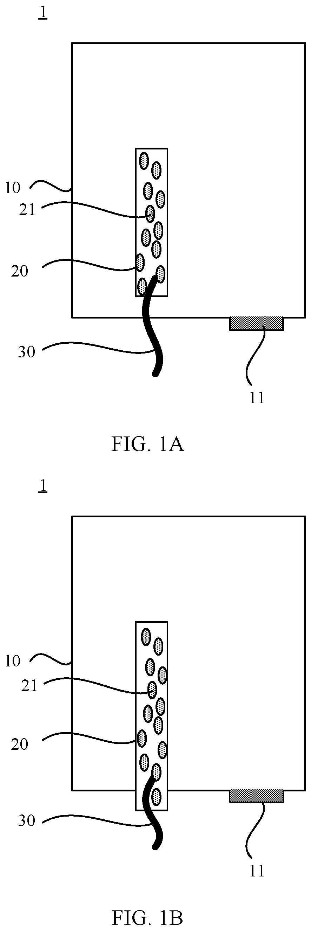

As shown in FIG. 1A, fire extinguishing equipment 1 includes a first chamber 10, a second chamber 20, and an activation line 30. The first chamber 10 stores a fire extinguishing chemical agent, and the second chamber 20 stores a gas-generating chemical agent.

A working process of the fire extinguishing equipment 1 is as follows: Gas is generated after the activation line 30 ignites the gas-generating chemical agent in the second chamber 20, and the second chamber 20 sprays the gas inside the second chamber 20 into the first chamber 10 to increase pressure of the first chamber 10, so that the first chamber 10 discharges the fire extinguishing chemical agent inside the first chamber 10.

The first chamber 10 is a sealed chamber, and the fire extinguishing chemical agent (not shown in FIG. 1A) is stored in the first chamber 10.

A shape of the first chamber 10 is not limited in this embodiment of this application, and may be properly disposed based on an application scenario of the fire extinguishing equipment 1.

In some embodiments, the first chamber 10 is applied to a battery pack, and the first chamber 10 matches a shape of the battery pack. The battery pack is in a rectangular block shape, and the shape of the first chamber 10 is also a rectangular chamber. For example, the first chamber 10 is a cuboid.

A material of the first chamber 10 is not limited in this embodiment of this application. In some embodiments, when the material of the first chamber 10 is selected, it is ensured that the first chamber 10 does not react with the fire extinguishing chemical agent stored in the first chamber 10, to ensure long-term storage of the fire extinguishing chemical agent by the first chamber 10.

In some embodiments, the material of the first chamber 10 is a material that meets at least one of high temperature resistance (for example, a melting point of the material of the first chamber 10 is greater than or equal to 800°C), impact resistance, or corrosion resistance.

For example, the material of the first chamber 10 is metal. For example, the material of the first chamber 10 is refractory metal such as tungsten, molybdenum, tantalum, niobium, vanadium, chromium, titanium, zirconium, stainless steel, and aluminum.

Alternatively, for example, the material of the first chamber 10 is a non-metallic compound. For example, the material of the first chamber 10 is a boride, a carbide, a nitride, a silicide, a phosphide, a sulfide, and the like of rare earth metal. Alternatively, for example, the material of the first chamber 10 is a non-intermetallic compound. For example, the material of the first chamber 10 is boron carbide, silicon carbide, boron nitride, silicon nitride, boron phosphide, silicon phosphide, or the like.

The material forming the first chamber 10 is the material with high temperature resistance, impact resistance and corrosion resistance, so that the first chamber 10 can ensure the long-term storage of the fire extinguishing chemical agent, ensure high temperature resistance in a working environment of the battery pack, and ensure impact resistance in an application scenario of the battery pack.

In some embodiments, the fire extinguishing chemical agent may include one or more of a liquid fire extinguishing agent, a gas fire extinguishing agent, a dry powder fire extinguishing agent, or a foam fire extinguishing agent.

For example, the fire extinguishing chemical agent is carbon dioxide, haloalkanes, an aerosol, foam, dry powder, perfluorohexanone, or fluorinated ketone, and a combination thereof.

For the second chamber 20 of the fire extinguishing equipment 1, as shown in FIG. 1A, the second chamber 20 is a sealed chamber, and a gas-generating chemical agent 21 is stored in the second chamber 20.

A material of the second chamber 20 may be metal or non-metal. For example, the material of the second chamber 20 is metal, plastic, glass fiber, tetrafluoroethylene, or the like. Certainly, the material of the second chamber 20 may alternatively be the same as the material of the first chamber 10.

In some embodiments, the gas-generating chemical agent may include, for example, an aerosol or gunpowder.

A shape of the second chamber 20 is not limited in this embodiment of this application. In some embodiments, the second chamber 20 is located outside the first chamber 10.

In some embodiments, the second chamber 20 is smaller than the first chamber 10, and at least a part of the second chamber 20 is disposed in the first chamber 10.

For example, in some embodiments, as shown in FIG. 1A, the second chamber 20 is disposed in the first chamber 10. Optionally, the second chamber 20 is fastened to the first chamber 10. For example, the second chamber 20 is fastened to the first chamber 10 in a manner of welding, bonding, riveting, nailing, clamping, embedded connection, expansion bolt connection, or the like.

The second chamber 20 is fastened to the first chamber 10, to avoid shaking of the second chamber 20, to prevent the fire extinguishing equipment from mistakenly discharging the fire extinguishing chemical agent that is caused by an increase in pressure in the second chamber 20 and the first chamber 10 caused by the shaking of the second chamber 20.

In some other embodiments, as shown in FIG. 1B, a part of the second chamber 20 is disposed in the first chamber 10, and a part of the second chamber 20 extends out of the first chamber 10.

For example, the second chamber 20 passes through a via in the first chamber 10, and extends out of the first chamber 10.

In some embodiments, when the second chamber 20 extends out of the first chamber 10, it should be ensured that the second chamber 20 is in sealing contact with the first chamber 10.

For example, a sealant is disposed in a position in which the second chamber 20 is in contact with the first chamber 10, to ensure that the second chamber 20 is in sealing contact with the first chamber 10. Alternatively, welding is performed on the position in which the second chamber 20 is in contact with the first chamber 10, to ensure that the second chamber 20 is in sealing contact with the first chamber 10.

Optionally, the second chamber 20 is fastened to the first chamber 10.

For example, the second chamber 20 is directly fastened to the first chamber 10 in a manner of welding, bonding, riveting, nailing, clamping, embedded connection, expansion bolt connection, or the like.

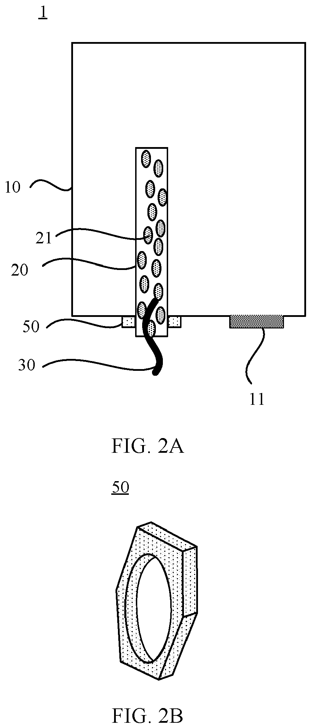

Alternatively, for example, as shown in FIG. 2A, the second chamber 20 is fastened to the first chamber 10 by using a first mounting base 50.

In other words, the second chamber 20 is fastened to the first mounting base 50, and the first mounting base 50 is fastened to the first chamber 10, so that the second chamber 20 is fastened to the first chamber 10.

In some embodiments, as shown in FIG. 2A, the fire extinguishing equipment 1 further includes the first mounting base 50, and the first mounting base 50 is disposed outside the first chamber 10, and is fastened to the first chamber 10. A part of the second chamber 20 extends out of the first chamber 10, and is fastened to the first mounting base 50. A material of the first mounting base 50 may be the same as the material of the first chamber 10. For example, the material of the first mounting base 50 is metal.

For the manner of connecting the first mounting base 50 to the first chamber 10, the first mounting base 50 may be fastened to the first chamber 10 in a manner of welding, bonding, riveting, nailing, clamping, embedded connection, expansion bolt connection, or the like.

For a structure of the first mounting base 50, in some embodiments, as shown in FIG. 2B, the first mounting base 50 is ring-shaped.

Certainly, a specific shape of the ring is not limited, provided that a shape of an inner ring of the first mounting base 50 matches the shape of the second chamber 20. For example, the shape of the inner ring of the first mounting base 50 and a shape of an outline of the second chamber 20 are the same, concentric structures.

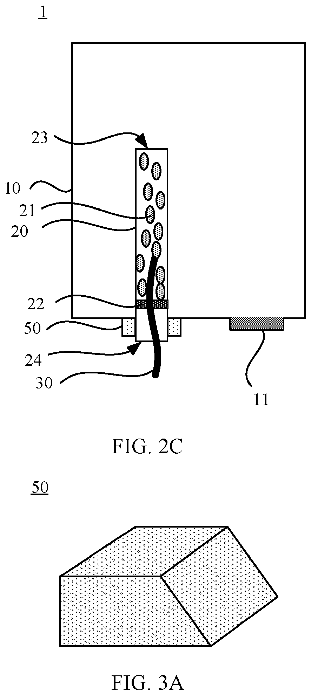

When the first mounting base 50 is disposed as ring-shaped, and the second chamber 20 is fastened to the first mounting base 50, as shown in FIG. 2A, the second chamber 20 may extend out of the first mounting base 50, or as shown in FIG. 2C, the second chamber 20 may not extend out of the first mounting base 50. Therefore, the first mounting base 50 is disposed as ring-shaped, a requirement on a matching degree between the second chamber 20 and the structure of the first mounting base 50 is low, conditions for limiting the manner of connecting the second chamber 20 to the first mounting base 50 are few, and an application scope is wide.

In this case, for the manner of connecting the second chamber 20 to the first mounting base 50, for example, the second chamber 20 is connected to the first mounting base 50 through screw threads.

For example, an internal screw thread is formed on the inner ring of the first mounting base 50, an external screw thread is formed on the part that is of the second chamber 20 and that extends out of the first chamber 10, and the second chamber 20 is connected to the first mounting base 50 through the screw threads.

Alternatively, for example, the second chamber 20 is connected to the first mounting base 50 through an interference fit.

For example, the part of the second chamber 20 that extends out of the first chamber 10 is pyramidal, and the second chamber 20 extends into the first mounting base 50 for the interference fit connection.

Alternatively, for example, the second chamber 20 is connected to the first mounting base 50 through snap-fitting. Alternatively, for example, the second chamber 20 is connected to the first mounting base 50 through back-off snap-fitting.

Alternatively, for example, the second chamber 20 is welded to the first mounting base 50.

Alternatively, for example, the second chamber 20 is bonded to the first mounting base 50.

Certainly, the manner in which the second chamber 20 is connected to the first mounting base 50 is merely an example, and this is not limited.

In some other embodiments, as shown in FIG. 3A, the first mounting base 50 is a block structure.

Similarly, a specific shape of the block structure is not limited.

The first mounting base 50 is disposed as the block structure, and a requirement on shape matching between the first mounting base 50 and the second chamber 20 can be reduced. On the one hand, there is no requirement on a shape of the first mounting base 50, which can reduce difficulty of preparing the first mounting base 50. On the other hand, there is no requirement on the shape of the second chamber 20, and the second chamber 20 may be applicable to any shape.

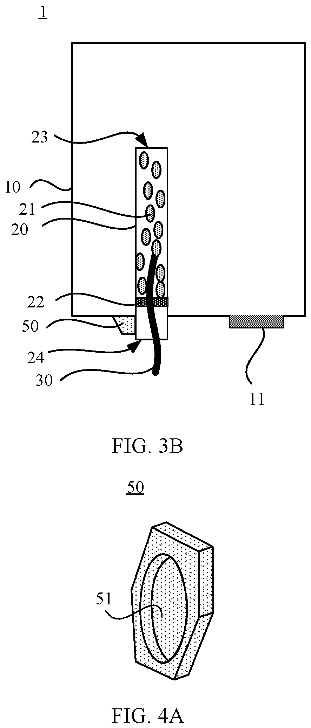

In this case, as shown in FIG. 3B, the second chamber 20 is fastened to the first mounting base 50 in a manner of, for example, welding, bonding, riveting, nailing, or clamping.

Certainly, the manner in which the second chamber 20 is connected to the first mounting base 50 is merely an example, and this is not limited.

In still some embodiments, as shown in FIG. 4A, the first mounting base 50 is a chamber structure with an opening. In other words, the first mounting base 50 includes a chamber bottom 51.

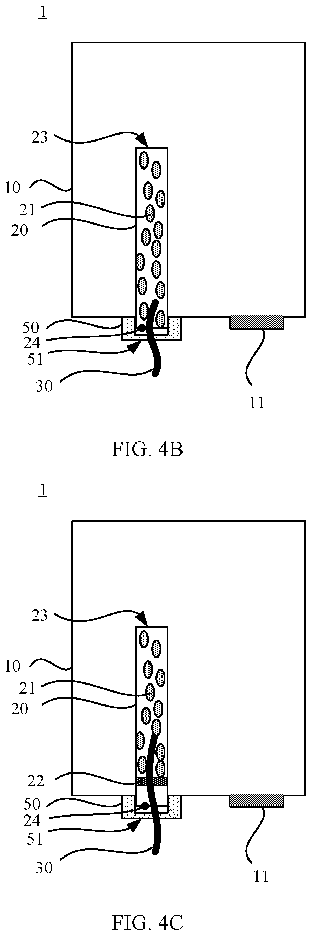

Similarly, a specific shape of the chamber with an opening is not limited, provided that a shape of the chamber of the first mounting base 50 matches the shape of the second chamber 20. For example, the shape of the chamber of the first mounting base 50 and the shape of the outline of the second chamber 20 are the same, concentric structures. As shown in FIG. 4B and FIG. 4C, the opening of the first mounting base 50 is disposed towards the first chamber 10, and the first mounting base 50 is connected to the first chamber 10 through snap-fitting.

The first mounting base 50 is disposed as the chamber structure with an opening, the first mounting base 50 is connected to the first chamber 10 through the snap-fitting, and the chamber of the first mounting base 50 communicates with the via in the first chamber 10, so that the first mounting base 50 and the first chamber 10 form a sealed structure. Therefore, compared with that the first chamber 10 is ring-shaped, the first mounting base 50 is the chamber structure with an opening, which can further seal the first chamber 10 and the second chamber 20.

In this case, for the manner of connecting the second chamber 20 to the first mounting base 50, for example, the second chamber 20 is connected to the first mounting base 50 through screw threads.

Alternatively, for example, the second chamber 20 is connected to the first mounting base 50 through an interference fit.

Alternatively, for example, the second chamber 20 is connected to the first mounting base 50 through snap-fitting. Alternatively, for example, the second chamber 20 is welded to the first mounting base 50.

Alternatively, for example, the second chamber 20 is bonded to the first mounting base 50.

Certainly, the manner in which the second chamber 20 is connected to the first mounting base 50 is merely an example, and this is not limited.

It should be understood that the second chamber 20 may alternatively not be connected to the first chamber 10. This is not limited in this embodiment of this application.

In some embodiments, as shown in FIG. 2C and FIG. 4C, a first sealing piece 22 is further disposed in the second chamber 20. The gas-generating chemical agent 21 is located between the first sealing piece 22 and a first side wall 23 of the second chamber 20.

As shown in FIG. 2C and FIG. 4C, the first side wall 23 is disposed opposite to a second side wall 24, the first side wall 23 is located inside the first chamber 10, and the second side wall 24 is located outside the first chamber 10. The first sealing piece 22 may be, for example, a sealing plug, a sealing sheet, dispensed adhesive, a metal snap-fit + a sealing ring, or the like.

Because the second side wall 24 is located outside the first chamber 10, the first sealing piece 22 is disposed in the second chamber 20, and the first sealing piece 22 is located between the second side wall 24 and the gas-generating chemical agent 21, so that the first sealing piece 22 can further seal the gas-generating chemical agent 21, to prevent the gas-generating chemical agent from not being discharged because of being damped by external water vapor, and another problem. In other words, the second chamber 20 can be sealed relative to the outside by disposing the first sealing piece 22.

For the activation line 30 in the fire extinguishing equipment 1, as shown in FIG. 1A, the activation line 30 extends into the second chamber 20 to be in contact with the gas-generating chemical agent 21 for igniting the gas-generating chemical agent to generate the gas.

In some embodiments, the activation line 30 extends from outside of the first chamber 10 into the second chamber 20, and if the activation line 30 needs to pass through a side wall of the first chamber 10 and the side wall of the second chamber 20, the activation line 30 is in sealing contact with the side wall of the first chamber 10 and the side wall of the second chamber 20.

In other words, in some embodiments of this application, the activation line 30 is in sealing contact with the first chamber 10 and the second chamber 20.

In some embodiments, as shown in FIG. 1A, the second chamber 20 does not extend out of the first chamber 10, and the activation line 30 passes through the side wall of the first chamber 10 and the side wall of the second chamber 20 to be in contact with the gas-generating chemical agent 21.

In this case, the activation line 30 needs to be in sealing contact with both the side wall of the first chamber 10 and the side wall of the second chamber 20. For example, a sealant may be disposed in a position in which the activation line 30 is in contact with the side wall of the first chamber 10 and the side wall of the second chamber 20, to implement the sealing contact between the activation line 30 and the first chamber 10 and the second chamber 20.

In some other embodiments, as shown in FIG. 2A, the second chamber 20 extends out of the first chamber 10, but the first mounting base 50 is of an open structure, and the first sealing piece 22 is not disposed in the second chamber 20. The activation line 30 passes through the side wall of the second chamber 20 to be in contact with the gas-generating chemical agent 21.

In this case, the activation line 30 needs to be in sealing contact with the side wall of the second chamber 20, to implement the sealing contact between the activation line 30 and the first chamber 10 and the second chamber 20.

In still some embodiments, as shown in FIG. 2C, the second chamber 20 extends out of the first chamber 10, but the first mounting base 50 is of an open structure, and the first sealing piece 22 is disposed in the second chamber 20. The activation line 30 extends into the second chamber 20 from the second side wall 24 of the second chamber 20 and passes through the first sealing piece 22 to be in contact with the gas-generating chemical agent 21.

In this case, the activation line 30 needs to be in sealing contact with the second side wall 24 or the first sealing piece 22 of the second chamber 20, to implement the sealing contact between the activation line 30 and the first chamber 10 and the second chamber 20.

In still some embodiments, as shown in FIG. 4B, the second chamber 20 extends out of the first chamber 10, the first mounting base 50 includes the chamber bottom 51, and the activation line 30 passes through the chamber bottom 51 of the first mounting base 50 and extends into the second chamber 20 from the second side wall 24 of the second chamber 20 to be in contact with the gas-generating chemical agent 21.

In this case, the activation line 30 needs to be in sealing contact with the chamber bottom 51 of the first mounting base 50 or the second side wall 24 of the second chamber 20, to implement the sealing contact between the activation line 30 and the first chamber 10 and the second chamber 20.

In still some embodiments, as shown in FIG. 4C, the second chamber 20 extends out of the first chamber 10, the first mounting base 50 includes the chamber bottom 51, and the first sealing piece 22 is disposed in the second chamber 20. The activation line 30 passes through the chamber bottom 51 of the first mounting base 50, extends into the second chamber 20 from the second side wall 24 of the second chamber 20, and passes through the first sealing piece 22 to be in contact with the gas-generating chemical agent 21.

In this case, the activation line 30 needs to be in sealing contact with at least one of the chamber bottom 51 of the first mounting base 50, the second side wall 24 of the second chamber 20, or the first sealing piece 22, to implement the sealing contact between the activation line 30 and the first chamber 10 and the second chamber 20.

In some embodiments, the activation line 30 includes a thermosensitive cable.

When a temperature of an environment in which the fire extinguishing equipment 1 is located exceeds an ignition point of the thermosensitive cable, the thermosensitive cable can spontaneously ignite, to implement active starting of the fire extinguishing equipment 1.

In some other embodiments, the activation line 30 includes an igniter.

When it is determined that the environment in which the fire extinguishing equipment 1 is located is on fire, the igniter is subjectively ignited, to implement passive starting of the fire extinguishing equipment 1 and avoid false starting of the fire extinguishing equipment 1.

In still some embodiments, the activation line 30 includes not only the thermosensitive cable but also the igniter.

In this way, the fire extinguishing equipment 1 has functions of active starting and passive starting. Once a passive starting control system fails, the thermosensitive cable that can actively start can further ensure normal use of the fire extinguishing equipment 1 and ensure performance of the extinguishing equipment 1.

It can be learned from the working process of the fire extinguishing equipment 1 that, the gas is generated after the activation line 30 ignites the gas-generating chemical agent in the second chamber 20, and the second chamber 20 sprays the gas inside the second chamber 20 into the first chamber 10.

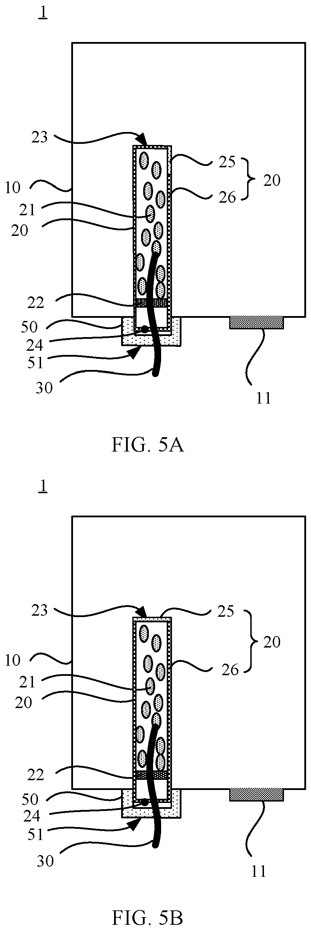

Therefore, in some embodiments, as shown in FIG. 5A, the second chamber 20 further includes a pressure relief opening, and the pressure relief opening communicates with the inside of the second chamber 20, to form a sealed structure. The pressure relief opening is configured to spray the gas in the second chamber 20 to the first chamber 10. In some embodiments, a chamber wall of the second chamber 20 includes a first part 25 and a second part 26 that are in a sealed connection. The first part 25 is the pressure relief opening.

When the second chamber 20 is located outside the first chamber 10, the pressure relief opening may communicate with the first chamber 10 by using, for example, a structure such as a pipe.

When at least a part of the second chamber 20 is disposed in the first chamber 10, the pressure relief opening is located in the first chamber 10.

For example, the pressure relief opening (the first part 25) of the second chamber 20 is a first pressure relief film, the second part 26 is a metal or non-metallic film, and the pressure relief opening is in a sealed connection to the second part 26, to ensure that the second chamber 20 is the sealed chamber.

A working principle of the pressure relief film is as follows: The pressure relief film is usually a brittle material. When the pressure in the second chamber 20 exceeds specified pressure, the pressure relief film breaks, and the gas-generating chemical agent in the second chamber 20 is released.

A material of the pressure relief film may include, for example, an aluminum foil sheet, a thin aluminum panel, sheet rubber, a film (an X-ray film and a celluloid sheet), a plexiglass sheet, and the like.

A specific position of the first pressure relief film in the chamber wall is not limited in this embodiment of this application, provided that the first pressure relief film is located in the first chamber 10.

In some embodiments, as shown in FIG. 5A, the pressure relief opening (the first part 25) is located on a side wall that is of the second chamber 20 that intersects the first side wall 23.

In some other embodiments, to facilitate a connection between the first part 25 and the second part 26, as shown in FIG. 5B, the pressure relief opening (the first part 25) is used as the first side wall 23 of the second chamber 20.

For a manner of implementing a sealed connection between the first part 25 and the second part 26, the sealed connection between the first part 25 and the second part 26 may be implemented through bonding, end face sealing, or the like.

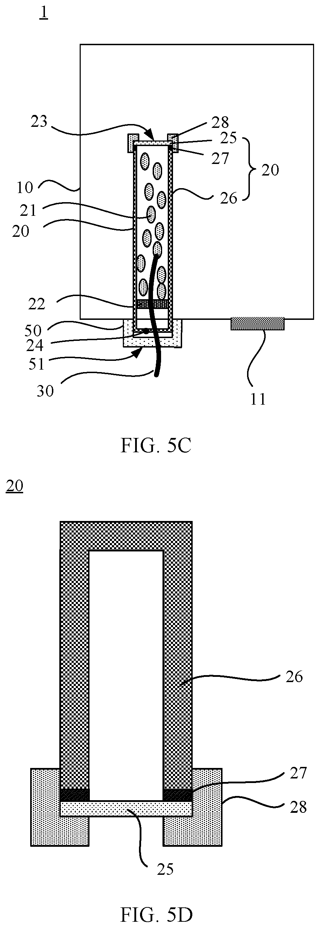

In some embodiments, as shown in FIG. 5C, the second chamber 20 further includes a first sealing ring 27 and a first connecting piece 28.

Two opposite sides of the first sealing ring 27 are respectively in contact with the first pressure relief film (the first part 25) and the second part 26. The first connecting piece 28 is located on a side that is of the first pressure relief film and that is away from the first sealing ring 27, and is fastened to the second part 26.

The first sealing ring 27 may be, for example, a seal ring, a gasket, a ring with dispensed adhesive.

It may be understood that, as shown in FIG. 5D, the first connecting piece 28 should be ring-shaped. In other words, the bottom of the first connecting piece 28 has an opening to expose the first pressure relief film, to ensure that the gas-generating chemical agent in the second chamber 20 can be discharged when the first pressure relief film breaks. For example, the first connecting piece 28 is a gasket ring.

For a manner in which the first connecting piece 28 is fastened to the second part 26, in some embodiments, the first connecting piece 28 is connected to the second part 26 through screw threads.

Alternatively, in some other embodiments, the first connecting piece 28 (for example, a cover body) is sleeved outside the second part 26 and is connected to the second part 26 through an interference fit.

Alternatively, in some other embodiments, the first connecting piece 28 (for example, a rubber plug) extends into the second part 26 to be connected to the second part 26 through an interference fit.

Alternatively, in still some embodiments, the first connecting piece 28 is welded to the second part 26. Alternatively, in still some embodiments, the first connecting piece 28 is bonded to the second part 26.

Certainly, the foregoing connection manner is merely an example, and this is not limited.

The first connecting piece 28 is fastened to the second part 26, and the first part 25 is attached to the second part 26. Existence of the first sealing ring 27 can enhance sealing performance of the connection between the first part 25 and the second part 26. As a result, a sealed connection between the first part 25 and the second part 26 is implemented. According to the working principle of the fire extinguishing equipment 1, after the gas generated after the gas-generating chemical agent is ignited enters the first chamber 10, the pressure of the first chamber 10 increases, and the first chamber 10 discharges the fire extinguishing chemical agent inside the first chamber 10, to implement fire extinguishing.

Therefore, in some embodiments, as shown in FIG. 1A, the first chamber 10 further includes a discharge opening 11, and the discharge opening 11 communicates with the inside of the first chamber 10, to form a sealed structure. The discharge opening 11 is configured to discharge the fire extinguishing chemical agent in the first chamber 10 after the gas generated after the gas-generating chemical agent is ignited enters the first chamber 10.

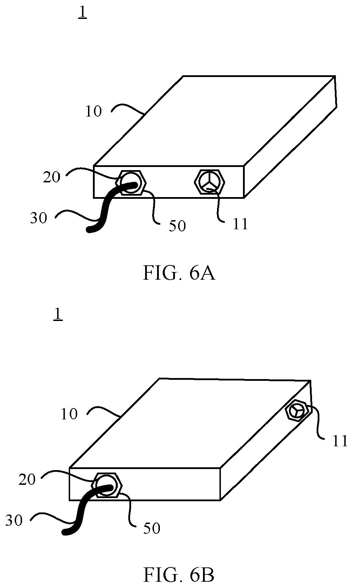

In some embodiments, as shown in FIG. 6A, the discharge opening 11 and the extending part of the second chamber 10 are located on a same side of the first chamber 10.

In other words, when the fire extinguishing equipment 1 further includes the first mounting base 50, the first mounting base 50 and the discharge opening 11 are located on a same side of the first chamber 10.

In some other embodiments, as shown in FIG. 6B, the discharge opening 11 and the extending part of the second chamber 10 may not be located on the same side of the first chamber 10.

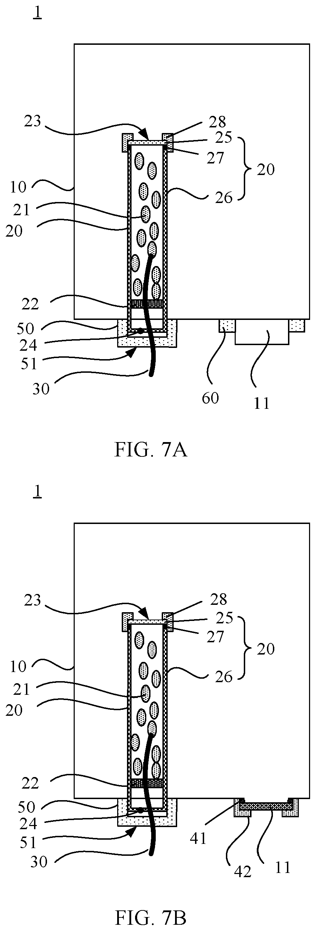

For a structure of the discharge opening 11, in some embodiments, as shown in FIG. 7A, the discharge opening 11 is a pressure relief valve.

A working principle of the pressure relief valve is: When the pressure in the device exceeds specified pressure of the pressure relief valve, pressure relief is automatically started. When the pressure relief valve is opened, the fire extinguishing chemical agent in the first chamber 10 is discharged.

The pressure relief valve, for example, may be a spring-type pressure relief valve, a lever-type pressure relief valve, or a pulse-type pressure relief valve (also referred to as a pilot operated relief valve).

The pulse-type pressure relief valve is composed of a main pressure relief valve and an auxiliary valve. When the pressure of the fire extinguishing chemical agent in the first chamber 10 exceeds a specified pressure value, the auxiliary valve is opened first, the fire extinguishing chemical agent enters the main pressure relief valve along a conduit, and the main pressure relief valve is opened, so that the increased pressure of the fire extinguishing chemical agent is reduced.

The pulse-type pressure relief valve is used to implement pulse discharge of the fire extinguishing chemical agent. The pulse discharge can enhance fire extinguishing efficiency and increase pulse blowout effect. In addition, the pulse discharge can allow a small amount of fire extinguishing chemical agent to be evenly distributed in a large space range, to prevent insufficient concentration of the fire extinguishing chemical agent.

In this case, for the manner of implementing sealed communication between the pressure relief valve and the inside of the first chamber 10, in some embodiments, the fire extinguishing equipment 1 further includes a second mounting base 60, the second mounting base 60 is fastened to the first chamber 10, and the pressure relief valve is fastened to the second mounting base 60, to implement a fastened connection between the pressure relief valve and the first chamber 10.

A structure of the second mounting base 60 is not limited in this embodiment of this application, provided that the second mounting base 60 matches the structure of the pressure relief valve. For the manner of connecting the second mounting base 60 to the first chamber 10, refer to the manner of connecting the first mounting base 50 to the first chamber 10. For the manner of connecting the pressure relief valve to the second mounting base 60, refer to the manner of connecting the first mounting base 50 to the second chamber 20.

In some embodiments, a seal ring, a gasket, or a sealant is further disposed between the pressure relief valve and the first chamber 10, to improve sealing effect between the pressure relief valve and the first chamber 10.

For the structure of the discharge opening 11, in some other embodiments, as shown in FIG. 7B, the discharge opening 11 is a second pressure relief film.

A working principle of the pressure relief film is as follows: The pressure relief film is usually a brittle material. When the pressure in the first chamber 10 exceeds the specified pressure, the pressure relief film breaks, and the fire extinguishing chemical agent in the first chamber 10 is released.

A material of the pressure relief film may include, for example, an aluminum foil sheet, a thin aluminum panel, sheet rubber, a film (an X-ray film and a celluloid sheet), a plexiglass sheet, and the like.

In this case, for the manner of implementing sealed communication between the second pressure relief film and the inside of the first chamber 10, in some embodiments, the fire extinguishing equipment 1 further includes a second sealing ring 41 and a second connecting piece 42.

Two opposite sides of the second sealing ring 41 are respectively in contact with the second pressure relief film and the first chamber 10. The second connecting piece 42 is located on a side that is of the second pressure relief film and that is away from the second sealing ring 41, and the second connecting piece 42 is fastened to the first chamber 10. It may be understood that the second connecting piece 42 should be ring-shaped to expose the second pressure relief film, to ensure that the fire extinguishing chemical agent can be discharged from the second pressure relief film. The second connecting piece 42 may be, for example, a pressing ring.

The manner of connecting the second connecting piece 42 to the first chamber 10 is not limited in this embodiment of this application. For details, refer to the manner of connecting the first mounting base 50 to the first chamber 10. After the second connecting piece 42 is fastened to the first chamber 10, the second pressure relief film is fastened between the second connecting piece 42 and the first chamber 10, so that the second pressure relief film is in a sealed connection to the first chamber 10 by using the second sealing ring 41.

In some embodiments, the fire extinguishing equipment 1 further includes a plastic protective cover, and the plastic protective cover is disposed on a side that is of the discharge opening 11 and that is away from the first chamber 10. It should be understood that the plastic protective cover is disposed on an outer side of the discharge opening 11, and when the fire extinguishing chemical agent is discharged from the discharge opening, the plastic protective cover can be directly spurted out by the fire extinguishing chemical agent.

The plastic protective cover may be, for example, a plastic film or a plastic cover, and is used for protecting the discharge opening 11 (for example, the pressure relief valve or the second pressure relief film) and preventing the discharge opening 11 from being damaged.

It can be learned from the foregoing descriptions that, in some embodiments, the fire extinguishing equipment 1 provided in this embodiment of this application should be of a sealed structure, and any two components should be in sealing contact, to ensure that the gas-generating chemical agent and the fire extinguishing chemical agent do not leak. The working principle of the fire extinguishing equipment 1 provided in this embodiment of this application is: The activation line 30 is configured to ignite the gas-generating chemical agent 21, the gas is generated after the activation line 30 ignites the gas-generating chemical agent 21, and the air pressure in the second chamber 20 increases. The pressure relief opening is configured to break (for example, break from the first pressure relief film) after the gas-generating chemical agent 21 is ignited, and spray the gas in the second chamber 20 to the first chamber 10. The air pressure in the first chamber 10 increases, and the discharge opening 11 is configured to discharge (for example, discharge after the second pressure relief film is broken, or discharge after the pressure relief valve is opened) the fire extinguishing chemical agent in the first chamber 10 after the gas enters the first chamber 10, to implement rapid fire extinguishing.

The fire extinguishing equipment 1 provided in this embodiment of this application has a simple working principle and a simple structure, does not require regular maintenance, has a low requirement on an application scenario, is applicable to any scenario, and has a wide application scope.

Based on this, an embodiment of this application further provides a battery pack (PACK). The fire extinguishing equipment 1 is applied to the battery pack, to implement precise fire extinguishing on the battery pack, thereby avoiding impact of a fire extinguishing chemical agent on another device.

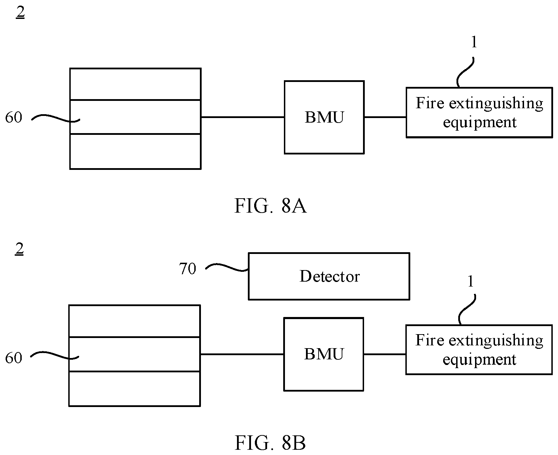

As shown in FIG. 8A, a battery pack 2 includes at least one cell 60, the fire extinguishing equipment 1, and a battery management unit (battery management unit, BMU).

When the battery pack 2 includes a plurality of cells 60, the plurality of cells 60 may be connected in series, or may be connected in parallel, and the plurality of cells 60 may be arranged in a laminated manner.

The BMU is, for example, a power or sampling board, and is configured to control the cell 60 to supply power. The fire extinguishing equipment 1 is configured to start when the battery pack 2 catches fire, to discharge the fire extinguishing chemical agent.

In some embodiments, an activation line 30 in the fire extinguishing equipment 1 is a thermosensitive cable, and after a temperature of the battery pack 2 exceeds an ignition point of the thermosensitive cable, the thermosensitive cable spontaneously ignites, and actively starts the fire extinguishing equipment 1 to discharge the fire extinguishing agent. In some other embodiments, the activation line 30 in the fire extinguishing equipment 1 is an igniter. As shown in FIG. 8A, the BMU is further connected to the fire extinguishing equipment 1, and is configured to ignite the activation line 30 in the fire extinguishing equipment 1.

In other words, the BMU is connected to the activation line 30, and when the battery pack 2 catches fire, the BMU outputs a startup current (that is, obtains power from the battery pack 2) to the activation line 30, to ignite the activation line 30.

Certainly, the activation line 30 may alternatively be ignited by another device (for example, an auxiliary power supply or power supply equipment disposed in the fire extinguishing equipment 1), and the foregoing is merely an example. This passive solution in which the fire extinguishing equipment 1 is started through the control of the BMU has high precision and a quick response.

In some embodiments, as shown in FIG. 8B, the battery pack 2 further includes a detector 70, and the detector 70 is configured to output a signal when an environment of the battery pack 2 is abnormal.

The detector 70 can detect a temperature, smoke, gas, radiation light intensity, liquid, or the like in the battery pack 2, to output the signal when phenomena, such as an opened cell valve, leakage, thermal runaway, BMU carbonization, harness and plastic structure combustion, occur.

The battery pack 2 provided in this embodiment of this application can transmit the signal to the BMU after the detector 70 detects the abnormal environment, and the BMU directly ignites the activation line 30, to perform fire extinguishing. Alternatively, after the abnormal environment is detected, whether there is an open flame may be detected, and the activation line 30 is ignited after the open flame is detected.

In this embodiment of this application, the fire extinguishing equipment 1 is disposed in the battery pack 2. When the battery pack 2 catches fire, the fire of the battery pack 2 may be extinguished by using the fire extinguishing equipment 1 disposed in the battery pack 2. On the one hand, the fire extinguishing equipment 1 is directly packaged inside the battery pack 2, the fire of the battery pack 2 can be extinguished from the inside, and fire extinguishing effect is better. On the other hand, the fire extinguishing equipment 1 is for highly targeted coverage and is only for extinguishing the fire of the battery pack 2 to which the fire extinguishing equipment 1 belongs, and the fire extinguishing chemical agent causes little damage to another component.

It should be noted that the battery pack 2 provided in this embodiment of this application may not only be applied to the electric vehicle, but also may be applied to a lithium-ion battery energy storage system such as a base station energy storage system, a data center backup power storage system, an uninterruptible power supply (UPS) system, or an energy storage power station.

The following describes how to ignite the activation line 30 after the open flame is detected when the battery pack 2 provided in this embodiment of this application is applied to the energy storage system.

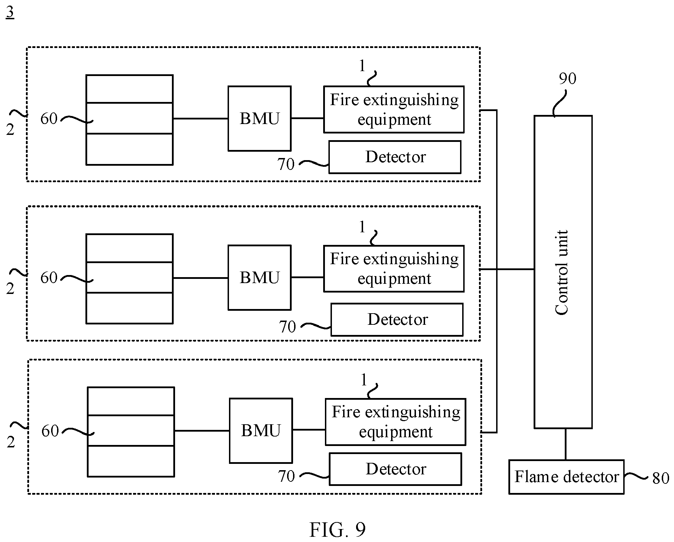

An embodiment of this application provides an energy storage system. As shown in FIG. 9, an energy storage system 3 includes at least one battery pack 2 (FIG. 9 is described by using a plurality of battery packs 2 as an example), a flame detector 80, and a control unit 90.

A detector 70 in the battery pack 2 is configured to determine whether the battery pack 2 is abnormal by detecting a temperature, smoke, gas, radiation light intensity, and the like in the battery pack 2, and output a signal to the control unit 90 when the battery pack 2 is abnormal.

The detector 70 may directly output the signal to the control unit 90, or may transmit the signal to a BMU, and then the BMU transmits the signal to the control unit 90.

The control unit 90 is connected to the battery pack 2 and the flame detector 80, and is configured to control the flame detector 80 to start when the signal from the detector 70 is received.

The flame detector 80 is configured to detect whether there is an open flame in the energy storage system 3, and outputs a signal to the control unit 90 when the open flame is detected.

After the control unit 90 receives the signal output by the flame detector 80, the control unit 90 controls an activation line 30 to ignite, and fire extinguishing equipment 1 is started to perform fire extinguishing.

In other words, in the energy storage system provided in this embodiment of this application, after the detector 70 inside the battery pack 2 detects that the battery pack 2 is abnormal, the detector 70 reports positioning to the system, and after the flame detector 80 detects the open flame, the fire extinguishing equipment 1 in the battery pack 2 that catches fire is precisely controlled by the control unit 90 to be started to achieve precise fire extinguishing.

For the manner in which the control unit 90 controls ignition of the activation line 30, in some embodiments, the BMU is connected to the activation line 30, the control unit 90 outputs a control signal to the BMU, and the BMU ignites the activation line 30.

In some other embodiments, the energy storage system 3 further includes an auxiliary power supply, the auxiliary power supply is connected to the activation line 30, and the control unit 90 outputs the control signal to the auxiliary power supply, to control the auxiliary power supply to ignite the activation line 30.

In still some embodiments, the fire extinguishing equipment further includes a built-in power supply unit, the built-in power supply unit is connected to the activation line 30, the control unit 90 outputs the control signal to the built-in power supply unit, and the built-in power supply unit ignites the activation line 30.

The control unit 90 may include a battery management system (battery management system, BMS), an energy storage system monitor, a brake control unit (brake control unit, BCU), a microcontroller unit (microcontroller unit, MCU), a vehicle control unit (vehicle control unit, VCU), or the like.

The energy storage system 3 provided in this embodiment of this application includes the battery pack 2 having fire extinguishing equipment 1. After the detector 70 in the fire extinguishing equipment 1 outputs the signal indicating that the environment of the battery pack 2 is abnormal, the control unit 90 controls the flame detector 80 to detect whether there is the open flame. When the flame detector 80 detects the open flame, the control unit 90 controls the fire extinguishing equipment 1 in the battery pack 2 with the abnormal environment to start the fire extinguishing. Because the signal indicating that the environment of the battery pack 2 is abnormal is sent by the battery pack 2, the control unit 90 may precisely control the fire extinguishing equipment 1 that is in and that corresponds to the battery pack 2 that catches fire to start the fire extinguishing. This reduces damage of the open flame and a fire extinguishing chemical agent to a device and reduces environmental impact.

After the energy storage system 3 is applied to an electric vehicle, the energy storage system 3 may be connected to a vehicle-mounted charger in the electric vehicle, and the energy storage system 3 is charged by using the vehicle-mounted charger.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. Fire extinguishing equipment, comprising:
a first chamber, comprising a discharge opening, wherein the first chamber stores a fire extinguishing chemical agent;
a second chamber, comprising a pressure relief opening, wherein the pressure relief opening is in communication with the first chamber, and the second chamber stores a gas-generating chemical agent; and
an activation line, extending into the second chamber and being in contact with the gas-generating chemical agent, wherein
the activation line is configured to ignite the gas-generating chemical agent to generate gas, the pressure relief opening is configured to spray the gas in the second chamber to the first chamber, and the discharge opening is configured to discharge the fire extinguishing chemical agent in the first chamber after the gas enters the first chamber

2. The fire extinguishing equipment according to claim 1, wherein at least a part of the second chamber is disposed in the first chamber, and the pressure relief opening is located in the first chamber

3. The fire extinguishing equipment according to claim 1 or 2, wherein the pressure relief opening is a first pressure relief film.

4. The fire extinguishing equipment according to claim 3, wherein the second chamber further comprises a first sealing ring and a first connecting piece;
two opposite sides of the first sealing ring are respectively in contact with the first pressure relief film and a second part; and
the first connecting piece is located on a side that is of the first pressure relief film and that is away from the first sealing ring, and is fastened to the second chamber.

5. The fire extinguishing equipment according to any one of claims 1 to 4, wherein a first sealing piece is disposed in the second chamber;
the gas-generating chemical agent is located between the first sealing piece and a first side wall of the second chamber, and the activation line extends into the second chamber from a second side wall of the second chamber, and passes through the first sealing piece to be in contact with the gas-generating chemical agent; and
the first side wall is disposed opposite to the second side wall.

6. The fire extinguishing equipment according to any one of claims 1 to 4, wherein a first side wall of the second chamber is the pressure relief opening; and
the activation line extends into the second chamber from a second side wall of the second chamber, and the first side wall is disposed opposite to the second side wall.

7. The fire extinguishing equipment according to any one of claims 1 to 6, wherein the second chamber is fastened to the first chamber.

8. The fire extinguishing equipment according to claim 7, wherein the fire extinguishing equipment further comprises a first mounting base, and the first mounting base is disposed outside the first chamber, and is fastened to the first chamber; and
the second chamber extends out of the first chamber, and is fastened to the first mounting base.

9. The fire extinguishing equipment according to claim 8, wherein the first mounting base is a chamber structure with an opening; and
the opening of the first mounting base faces the first chamber, the second chamber extends into the first mounting base, and the activation line passes through a chamber bottom of the first mounting base.

10. The fire extinguishing equipment according to claim 8, wherein the first mounting base and the discharge opening are located on a same side of the first chamber.

11. The fire extinguishing equipment according to any one of claims 1 to 10, wherein the discharge opening is a pressure relief valve; and
the fire extinguishing equipment further comprises a second mounting base, the second mounting base is fastened to the first chamber, and the pressure relief valve is fastened to the second mounting base.

12. The fire extinguishing equipment according to any one of claims 1 to 10, wherein the discharge opening is a second pressure relief film;
the fire extinguishing equipment further comprises a second sealing ring and a second connecting piece;
two opposite sides of the second sealing ring are respectively in contact with the second pressure relief film and the first chamber; and
the second connecting piece is located on a side that is of the second pressure relief film and that is away from the second sealing ring, and is fastened to the first chamber.

13. The fire extinguishing equipment according to any one of claims 1 to 12, wherein the activation line comprises at least one of a thermosensitive cable or an igniter.

14. A battery pack, comprising the fire extinguishing equipment according to any one of claims 1 to 13 and at least one cell, wherein
the cell is configured to supply power, and the fire extinguishing equipment is configured to discharge a fire extinguishing chemical agent when the battery pack catches fire.

15. The battery pack according to claim 14, wherein the battery pack further comprises a detector, and the detector is configured to output a signal when an environment of the battery pack is abnormal.

16. The battery pack according to claim 15, wherein the battery pack further comprises a battery management unit connected to an activation line in the fire extinguishing equipment and configured to ignite the activation line.

17. An energy storage system, comprising at least one battery pack, a control unit, and a flame detector, wherein the control unit is separately connected to the battery pack and the flame detector;
the battery pack is the battery pack according to any one of claims 14 to 16; and
the control unit is configured to control the flame detector to start when a signal of the detector is received, the flame detector is configured to output a signal to the control unit when an open flame is detected, and the control unit controls an activation line to ignite.

18. The energy storage system according to claim 17, wherein the control unit is configured to output a control signal to a battery management unit, to control the battery management unit to ignite the activation line.

19. The energy storage system according to claim 17, wherein the energy storage system further comprises an auxiliary power supply;
the auxiliary power supply is connected to the control unit and the activation line; and
the control unit is configured to output a control signal to the auxiliary power supply, to control the auxiliary power supply to ignite the activation line.

20. An electric vehicle, comprising the energy storage system according to any one of claims 17 to 19 and a vehicle-mounted charger, wherein the vehicle-mounted charger is connected to the energy storage system, and is configured to charge the energy storage system.
